# EUROPEAN PATENT APPLICATION

(11) **EP 3 454 500 A1**
(43) Date of publication of application: **13.03.2019**
(21) Application number: 18161248.2
(22) Date of filing: 12.03.2018
(51) Int. Cl.: H04L 9/08, H04L 29/06

(54) **COMMUNICATION APPARATUS, COMMUNICATION METHOD, COMPUTER-READABLE MEDIUM AND COMMUNICATION SYSTEM**

(30) Priority: 07.09.2017 JP 2017172466
(71) Applicant: KABUSHIKI KAISHA TOSHIBA, Minato-ku Tokyo 105-8001 (JP)
(72) Inventor: TANIZAWA, Yoshimichi, Tokyo, 105-8001 (JP)
(74) Representative: Moreland, David

(57) **Abstract**

According to an arrangement, a communication apparatus (10: 10-2) that offers an encryption key shared with another communication apparatus (10: 10-2) to an application (20; 20-2), and includes a calculator (103; 103-2) and a communication controller (101). The calculator (103; 103-2) is configured to calculate limit information for limiting a call for a request message in which the application (20; 20-2) requests the encryption key, based on at least one of a sharing rate of the encryption key and an accumulated volume of the encryption key. The communication controller (101) is configured to transmit a response message with the limit information to the application (20; 20-2), the response message returning the encryption key as a response to the request message.

## Description

### FIELD

The present disclosure relates generally to a communication apparatus, a communication method, a computer-readable medium, and a communication system.

### BACKGROUND

Known applications perform communication using an encryption key shared between communication apparatuses. For example, when updating the encryption key on a regular basis, the communication apparatus generates a new encryption key and shares the generated encryption key with another communication apparatus.

The sharing rate of an encryption key has an upper limit and may fluctuate due to external factors. When a plurality of applications connect with the same communication apparatus and uses an encryption key, the volume of the encryption key that can be used by each application may fluctuate depending on the number of connected applications. Thus, it is desirable that the volume of the encryption key offered to the application can be limited depending on, for example, the sharing rate of the encryption key and the accumulated volume of the encryption key.

### BRIEF DESCRIPTION OF THE DRAWINGS

FIG. 1 is a diagram illustrating an example of the basic configuration of a communication system;
FIG. 2 is a diagram illustrating an example of a quantum key distribution network;
FIG. 3 is a sequence diagram of a method of sharing a global key through the quantum key distribution network;
FIG. 4 is a diagram illustrating an example of connection-node information;
FIG. 5 is a block diagram of a node according to a first arrangement;
FIG. 6 is a diagram illustrating an example of a web API;
FIG. 7 is a diagram illustrating an example of a format of an encryption key and a key ID;
FIG. 8 is a diagram illustrating an example header of an HTTP response;
FIG. 9 is a diagram illustrating an example header of an HTTP response;
FIG. 10 is a diagram illustrating an example header of an HTTP response;
FIG. 11 is a diagram illustrating an example header of an HTTP response;
FIG. 12 is a sequence diagram of a communication process according to the first arrangement;
FIG. 13 is a sequence diagram of a communication process according to the first arrangement;
FIG. 14 is a block diagram of a node according to a second arrangement;
FIG. 15 is a sequence diagram of a communication process according to the second arrangement;
FIG. 16 is a sequence diagram of a communication process according to the second arrangement;
FIG. 17 is a sequence diagram of a communication process according to a first variation; and
FIG. 18 is a hardware-configuration diagram of a communication apparatus according to the first and second arrangements.

### DETAILED DESCRIPTION

According to an arrangement, a communication apparatus that offers an encryption key shared with another communication apparatus to an application, and includes a calculator and a communication controller. The calculator is configured to calculate limit information for limiting a call for a request message in which the application requests the encryption key, based on at least one of a sharing rate of the encryption key and an accumulated volume of the encryption key. The communication controller is configured to transmit a response message with the limit information to the application, the response message returning the encryption key as a response to the request message.

With reference to the accompanying drawings, a communication apparatus according to the present arrangements will now be described in detail.

As described above, depending on, for example, an upper limit of and fluctuations in the sharing rate of an encryption key, as well as the number of connected applications, the volume of the encryption key that can be used by each application may fluctuate.

The usual behavior of applications is to acquire and update the encryption key in response to a communication timing or on a regular basis. It is desirable that the applications can always get a sufficient volume of encryption key when requiring an encryption key. However, the above restriction may cause the case that this demand is not satisfied. Nevertheless, it is desirable to avoid the occurrence of at least the following situation: a sufficient volume of encryption key that has been able to be acquired until a certain point in time cannot be acquired suddenly. This is because, otherwise, despite the presence of data to be transmitted (or received), the data cannot be transmitted (or received) due to the failure in acquiring the encryption key.

In this way, the application wants to grasp a possible, proper acquisition frequency or acquisition volume of an encryption key in itself, on the basis of, for example, the sharing rate (accumulated volume) of the encryption key and their fluctuations, as well as the states of connected applications.

In contrast, the communication apparatus wants to perform a rate limit of the key that is allowed to be offered to each application, in view of fluctuations in the sharing rate and accumulated volume of the encryption key, and fluctuations in requests for the encryption keys from connected applications and a plurality of applications, as well as even the throughput of the communication apparatus itself.

In particular, it is desirable that the volume of the encryption key to be offered to the application can be properly limited such that the whole system prevents a shortage of the encryption key when using a technique for sharing a key at a rate that may fluctuate, such as quantum key distribution (QKD).

The quantum key distribution is a technique for sharing an encryption key safely using a single photon successively transmitted between a transmitter and a receiver coupled through an optical fiber. The principle of quantum mechanics ensures that the encryption key shared in the quantum key distribution is not tapped. The shared encryption key is used, for example, for encryption-data communication by one-time pads and other devices. Information theory ensures that encryption data transmitted and received by a one-time pad is not decoded by eavesdroppers having any knowledge.

The case where the quantum key distribution is applied as an encryption-key-sharing scheme will now be described as an example. Applicable schemes are not limited to the quantum key distribution, and any other encryption-key-sharing schemes can be applied.

### First Arrangement

A communication apparatus according to the first arrangement implements, using an application programming interface (API) that offers a key to an application, a function of a rate limit for limiting an encryption key to be offered. This limit is determined by at least one of the sharing rate (an increment or a fluctuation per unit time) and the accumulated volume (remaining volume) of the encryption key that the application requests.

### Basic Configuration

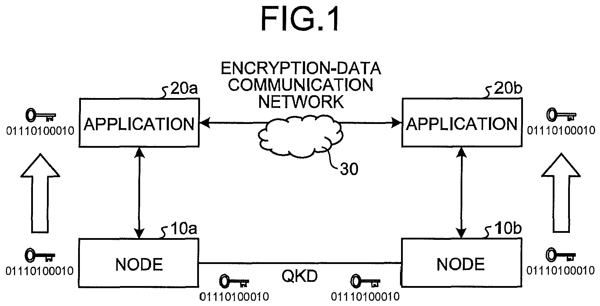

FIG. 1 is a diagram illustrating an example of the basic configuration of a communication system. The communication system in FIG. 1 includes a quantum key distribution system that contains nodes 10a and 10b, as well as an encryption-data communication system that contains applications 20a and 20b. The applications 20a and 20b perform encryption-data communication via an encryption-data communication network 30.

The node 10a and 10b are nodes (Trusted Nodes) that perform quantum key distribution. The description in FIG. 1 assumes that the node 10a is a communication apparatus on the transmitting side and that the node 10b is a communication apparatus on the receiving side. Hereinafter, without discrimination between the nodes 10a and 10b, they are referred to simply as a node 10.

The applications 20a and 20b perform encryption-data communication using an encryption key shared by the nodes 10a and 10b. An encryption key used by the application 20a is offered by the node 10a. An encryption key used by the application 20a is offered by the node 10b. The applications 20a and 20b are executed by information processing apparatuses, such as server apparatuses, personal computers, and smart devices. Hereinafter, without discrimination between the applications 20a and 20b, they are referred to simply as a application 20. The information processing apparatus that executes the application 20 may be the node 10.

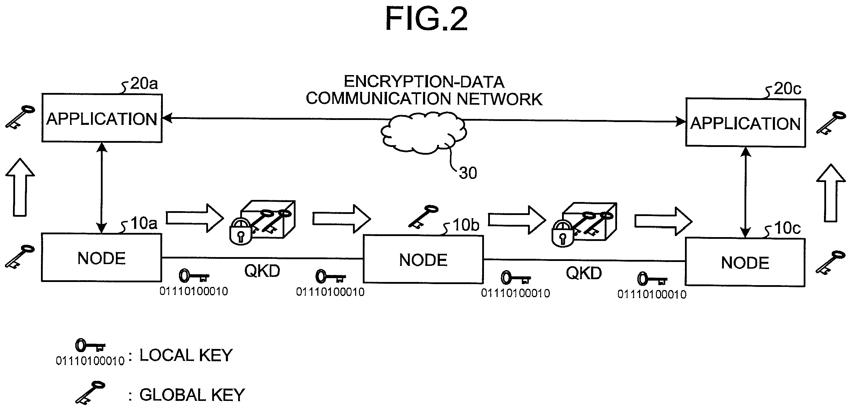

An encryption-key-sharing scheme with the quantum key distribution technique uses a single photon as a medium, and thus has a limitation of distance to which an encryption key is allowed to be shared. Thus, a quantum key distribution network (QKD network) as illustrated in FIG. 2 is used.

FIG. 2 is a diagram illustrating an example of a quantum-key distribution network. The quantum key distribution network in FIG. 2 includes the node 10a, the node 10b, and a node 10c coupled by an optical fiber link. An information processing apparatus that executes the application 20a is coupled to the node 10a. An information processing apparatus that executes an application 20c is coupled to the node 10c. The applications 20a and 20c perform encryption-data communication via an encryption-data communication network 30.

Each node 10 shares an encryption key by performing quantum key distribution to and from the adjacent node 10 coupled by the optical fiber link. In the description of the first arrangement, the encryption key shared in the quantum key distribution between adjacent nodes 10 coupled by the optical fiber link is referred to as a local key. That is, the local key is a link key used across the link.

Furthermore, the node 10 additionally generates an encryption key from, for example, random-number information, regardless of the quantum key distribution. In the description of the first arrangement, this encryption key is referred to as a global key. That is, the global key is an application encryption key used for encryption-data communication between the applications 20.

The node 10 encrypts the global key using the local key and transfers the encrypted global key to the adjacent node 10. Each node 10 repeats the process of transferring the encrypted global key using the local key to and from the adjacent node 10. This enables each node 10 to share the global key with any of the nodes 10.

As described above, the global key is transferred on the link in a state being encrypted using the local key shared in the quantum key distribution. Accordingly, assuming the safety of the node 10 itself, it can be said that the safety of the global key is ensured similarly to the local key.

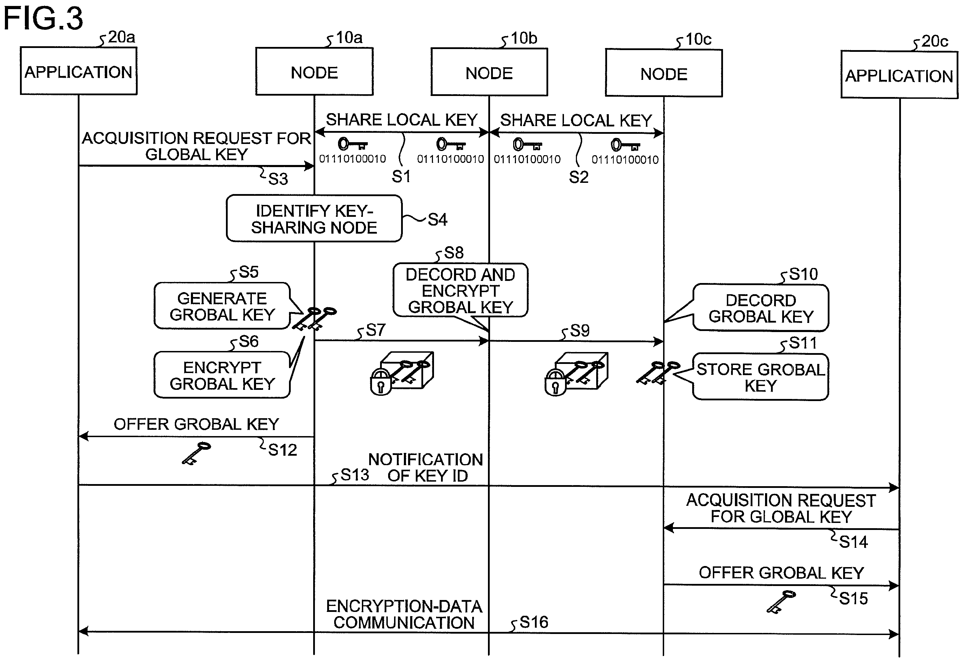

FIG. 3 is a sequence diagram illustrating an example of a method of sharing a global key (application encryption key) through the quantum key distribution network in FIG. 2. In the description of FIG. 3, the case where the application 20a performs encryption-data communication with the application 20c will be described.

First, the nodes 10a and 10b share a local key in quantum key distribution (step S1). The nodes 10b and 10c then share a local key in quantum key distribution (step S2).

The application 20a then transmits, to the node 10a, an acquisition request for a global key used for encryption-data communication with a communication destination of the application 20a (step S3). The acquisition request includes, for example, communication-destination-identifying information for identifying the communication destination. The communication-destination-identifying information is, for example, the application name of the communication destination and the address of the communication destination.

The node 10a then identifies the node 10c, which is coupled to the communication destination included in the acquisition request transmitted in the process of step S3, as the node 10 that shares the global key (step S4). Specifically, the node 10a identifies the node 10 that shares the global key by, for example, referring to connection-node information. The connection-node information is, for example, directory data that describes a connection relation between the application 20 and the node 10.

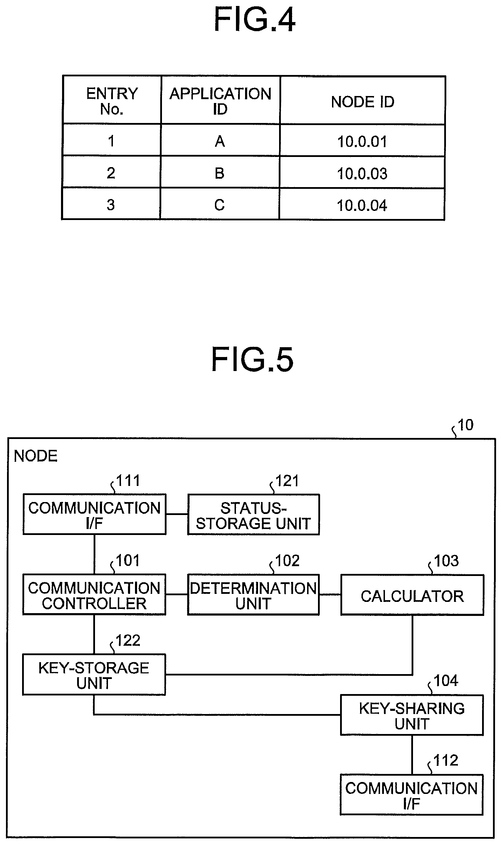

FIG. 4 is a diagram illustrating an example of the connection-node information. The connection-node information in FIG. 4 includes an entry No., an application ID, and a node ID. The entry No. is a number for identifying each data included in the connection-node information. The application ID is identifying information for identifying the application 20. For example, A indicates the application ID of the application 20a. The node ID is identifying information for identifying the node 10. In the example in FIG. 4, an IP address is used as the identifying information of each node 10.

Referring back to FIG. 3, the node 10a then generates a global key (step S5). The generated global key is identified by identifying information, such as a key ID for identifying the global key. The node 10a then encrypts the global key generated in the process of step S5 with the key ID of the global key, using the local key shared in the process of step S1 (step S6). The node 10a then transmits the global key encrypted in the process of step S6 to the node 10b (step S7).

The node 10b then decodes and encrypts the encrypted global key when receiving the encrypted global key from the node 10a (step S8). Specifically, the node 10b decodes the encrypted global key using the local key shared in the process of step S1 and encrypts the decoded global key using the local key shared in the process of step S2.

The node 10b then transmits the global key encrypted in the process of step S8 to the node 10c (step S9).

When receiving the encrypted global key from the node 10b, the node 10c then decodes the global key using the local key shared in the process of step S2 (step S10). The node 10c then stores the global key decoded in the process of step S10 (step S11).

The node 10a then offers, to the application 20a, the global key generated in the process of step S5 with the key ID of the global key (step S12).

The application 20a then notifies the application 20c of the key ID of the global key offered in the process of step S12 (step S13).

The application 20c then transmits an acquisition request for the global key, which includes the key ID notified in the process of step S13, to the node 10c (step S14). The application 20c then receives, from the node 10c, the global key identified by the key ID transmitted in the process of step S14 (step S15).

The applications 20a and 20b then perform encryption-data communication using the global key shared in the process of steps S1 to S15 (step S16).

In the above description, the case has been described where after the node 10a has received the acquisition request for the global key in the process of step S3, the sharing process of the global key in the process of steps S5 to S11. However, the sharing process of the global key may be performed at any timing. For example, the node 10a may use the global key previously shared between the nodes 10a and 10c, after receiving the acquisition request for the global key in the process of step S3.

In the above description, the case has been described where before the application 20a performs encryption-data communication with the application 20c, the notification of the key ID in the process of step S13 has been described. However, the notification process of the key ID may be performed at any timing. For example, the application 20a may transmit, to the application 20c, the key ID for identifying the global key offered in the process of step S12 with encryption data encrypted using the global key.

Typically, each node 10 described above is installed in the corresponding place geographically separated from each other, and each application 20 is executed on the corresponding node 10 or an information processing apparatus running in a server room or the like that is identical to the node 10.

FIG. 5 is a block diagram illustrating an example of the configuration of the node 10 according to the first arrangement. As illustrated in FIG. 1, the node 10 includes communication interfaces (I/Fs) 111 and 112, a status-storage unit 121, a key-storage unit 122, a communication controller 101, a determination unit 102, a calculator 103, and a key-sharing unit 104.

The communication I/F 111 is a network interface for the node 10 to communicate with the application 20. The communication I/F 112 is a network interface for the node 10 to communicate with another node 10 for the purpose of the sharing of a global key with each other.

The status-storage unit 121 stores, for example, the status of the application 20 connected with the node 10. The status-storage unit 121 stores, for example, the number of connected applications 20, and information for identifying the connected applications 20.

The key-storage unit 122 stores keys (a local key and a global key) shared with another node 10 by the key-sharing unit 104.

The communication controller 101 controls communication with an external apparatus, such as the application 20. For example, the communication controller 101 interprets a request message requesting an encryption key, and assembles a response message (also referred to as a key-offering message) for offering the encryption key to the application 20 in response to the request message.

The key-sharing unit 104 controls the sharing process of an encryption key with another node 10. For example, the key-sharing unit 104 generates an encryption key and shares the generated encryption key with another node 10. As described above, the quantum key distribution technique is used as the encryption-key-sharing scheme in the present arrangement. Thus, a local key is shared with the adjacent node 10. Furthermore, a global key is shared with any of the other nodes 10 using the local key.

The calculator 103 calculates limit information for limiting an encryption key to be offered. For example, the calculator 103 calculates limit information for limiting a call for the request message in which the application 20 requests an encryption key, based on at least one of the sharing rate of the encryption key and the accumulated volume of the encryption key. For example, the limit information includes at least one of the maximum value of the number of times that the request message is allowed to be called per unit time and the remaining number of times that the request message is allowed to be called per unit time.

In the present arrangement, the communication controller 101 transmits, to the application 20, the response message with the calculated limit information.

The determination unit 102 determines whether a limit that the limit information indicates is satisfied. For example, the determination unit 102 determines whether the limit of the call for the request message is exceeded when the request message is received.

In the present arrangement, the communication controller 101 further transmits, to the application 20, an error message indicating that the limit has been exceeded, when it is determined that the limit of the call for the request message is exceeded. The error message may include information that indicates the next timing at which the request message is allowed to be called.

The above units (the communication controller, the determination unit, the calculator, and the key-sharing unit) are implemented by, for example, one or more processors. For example, the above units may be implemented by causing a processor, such as a central processing unit (CPU), to execute a computer program, that is, by software. The above units may be implemented by a processor, such as a special-purpose IC, that is, by hardware. The above units may be implemented in a combination of software and hardware. For a plurality of processors, each processor may implement one of the units, or implement two or more of the units.

The above storage units (the status-storage unit 121 and the key-storage unit 122) can be configured with any storage medium that is generally used, such as a hard disk drive (HDD), an optical disk, a memory card, and a random access memory (RAM). Each storage unit may be a physically different storage medium, or may be implemented as a different storage area in a physically identical storage medium. Furthermore, each of the storage units may be implemented by a plurality of storage media that are physically different.

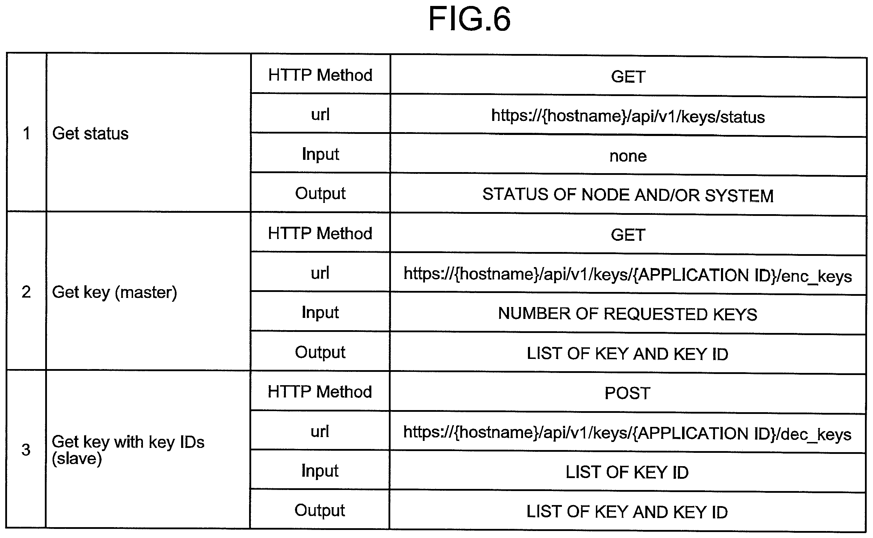

The communication process according to the present arrangement will now be described in more detail. Suppose that the application 20 on the starting side of an encryption-data-communication session is referred to as a master and the application 20 on the receiving side of the encryption-data-communication session is referred to as a slave. When an acquisition request for a global key is implemented by a web API, the web API is defined, for example, as illustrated in FIG. 6. FIG. 6 is a diagram illustrating an example of the web API. The API shown in FIG. 6 is an example and may use a message in any other formats.

A first API is used for a query for the status of the node 10 or the communication system by the application 20, not for acquisition of the encryption key by the application 20. "{Hostname}" is information for indicating the node 10 that is a destination of the query for the status.

A second API is an API (an example of a request message that requests an encryption key) for the master application 20 to acquire a key from the node 10. "{Application ID}" is an application ID of the application 20 (slave) as a communication partner of the application (master) that calls the API. The master application 20 indicates the number of encryption keys to the node 10 in the API. The node 10 returns the encryption keys and the key IDs to the master application 20.

A third API is an API for the slave application 20 to acquire a key from the node 10. "{Application ID}" is an application ID of the application 20 (master) as a communication partner of the application (slave) that calls the API. The slave application 20 indicates the key ID of an encryption key to be acquired to the node 10, in the API call. The node 10 returns the indicated encryption key and key ID to the slave application 20.

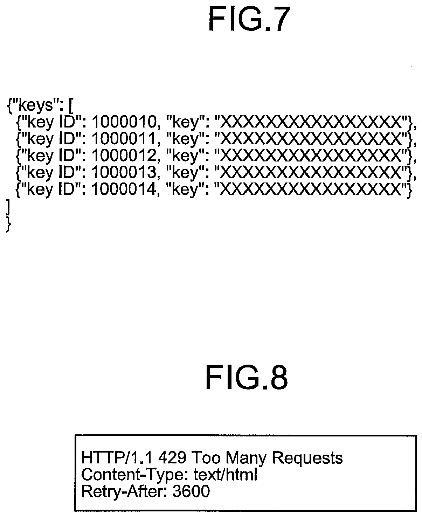

The encryption keys offered in the responses of the second and third APIs may have any data formats. The encryption key can be defined by, for example, a JavaScript (registered trademark) object notation (JSON) format. FIG. 7 is a diagram illustrating an example of the case where the encryption key and the key ID are defined by the JSON format. FIG. 7 expresses a list of combinations of a key ID, and "key", which is Base 64-encoded key data.

The application 20 acquires the encryption key using the API as illustrated in FIG. 6 and can perform any encryption communication with any of the other applications 20 using the acquired encryption key.

Next, a rate limit in the web API will be described. Two examples are now given.

A first example is a method that utilizes "HTTP status code 429: Too Many Requests", which is a status code defined in RFC6585. The server that has received a request for calling the API returns a hypertext transfer protocol (HTTP) response that indicates "HTTP status code 429: Too Many Requests" as the status code, when limiting the API call for the calling client.

The server indicates the length (seconds) of time for which the client should wait or absolute time for which the client should wait before a retry, by "Retry-After header" in this HTTP response.

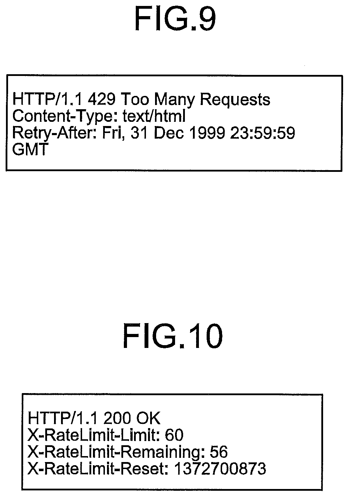

FIGS. 8 and 9 are diagrams illustrating an example header of the HTTP response in the first example. FIG. 8 is the example where the server notifies the client to perform a retry after 3,600 seconds or later. FIG. 9 is the example where the server notifies the client to perform a retry after "Fri, 31 Dec 1999 23:59:59 GMT".

A second example is a method that utilizes, for example, the web API described in "GitHub Developer, [online], August 2017, retrieved from the Internet: URL:https://developer.github.com/v3/#rate-limiting". The server that has received a request for calling the API notifies the calling client of the number of times that the API is allowed to be called per unit time, using HTTP headers, such as "X-RateLimit-Limit" and "X-RateLimit-Remaining", when returning a response (HTTP response) to the client. The HTTP response at this time may be a normal response, such as "200 OK".

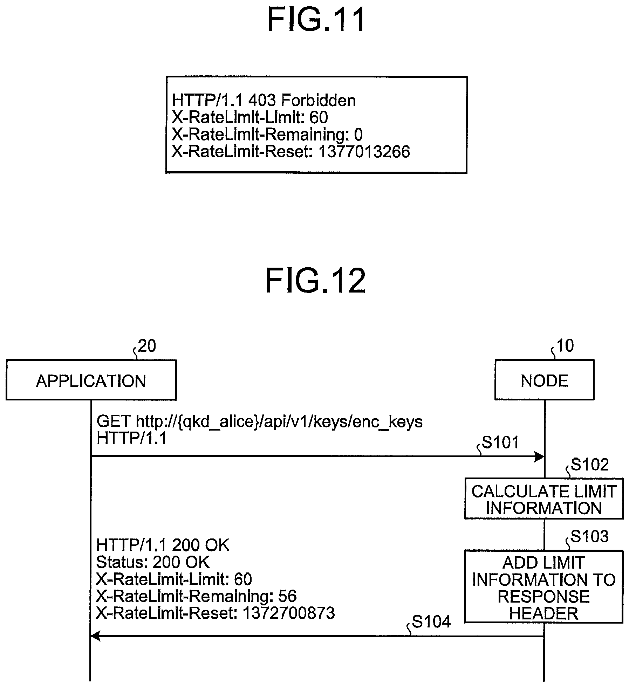

FIGS. 10 and 11 are diagrams illustrating an example header of the HTTP response in the second example. FIG. 10 illustrates the example where the number of API calls is permitted up to 60 times per unit time, the remaining number of allowed API calls is 56 times, and the number of API calls is reset after the lapse of time "1372700873 UTC epoch second". FIG. 11 illustrates an example of an HTTP response (an error response) that is returned when the API call exceeds a set rate limit.

In this way, the request message and the response message (key-offering message) transmitted and received between the application 20 and the node 10 are implemented in the web API based on the HTTP.

The API rate limit according to the present arrangement will now be described in detail. In the present arrangement, a key offering API, which offers an encryption key shared using the quantum key distribution technique to the application 20 from the node 10, offers the volume of the encryption key that is allowed to be offered to the API-calling application 20, using the scheme of the API rate limit as described above, and limits the API call.

The following parameters can be used as parameters used for limiting the API call. That is, the calculator 103 calculates the limit information for limiting the call for the request message, with reference to the following parameters:
- The sharing rate of the encryption key that the application 20 requests, and the accumulated volume of the encryption key (fluctuations in the sharing rate and the accumulated volume);
- The number of connected applications 20;
- The priorities of the connected application 20 and another application 20 in communication with the connected application 20;
- The sizes of the encryption keys that the connected application 20 and another application 20 in communication with the connected application 20 request;
- The volume of the encryption key previously offered to the connected application 20;
- The authentication results of the connected application 20 and another application 20 in communication with the connected application 20; and
- The throughput of the node 10.

The volume of the encryption key previously offered may be calculated from, for example, a request history of the encryption key. The authentication result may be whether the authentication is done, or may be information (an authentication level) for representing a level of the authentication.

The calculator 103 collects the values of the above parameters, such as the sharing state of the encryption key, the accumulation state of the encryption key, and the status of the application 20, for example, from the status-storage unit 121, the key-storage unit 122, and the key-sharing unit 104, and calculates the limit information for performing the rate limit.

For example, the limit information includes at least one of the maximum value of the number of times that the request message is allowed to be called per unit time and the remaining number of times that the request message is allowed to be called per unit time. When the method in "GitHub Developer, [online], August 2017, retrieved from the Internet: URL:https://developer.github.com/v3/#rate-limiting" is applied, the calculator 103 may calculate, as the limit information, the values of "X-RateLimit-Limit", "X-RateLimit-Remaining", "X-RateLimit-Reset", and other information, each of which is information added to the corresponding HTTP header. The calculator 103 accesses, for example, the communication controller 101 and adds the calculated limit information to the HTTP header.

The determination unit 102 determines whether the limit of a frequency with which the request message is called is exceeded, for example, with reference to "X-RateLimit-Limit", "X-RateLimit-Remaining", and the like. The determination unit 102 notifies the communication controller 101 of the determination result to cause the communication controller 101 to transmit the determination result to the application 20 that has transmitted the request message.

A message sequence between the application 20 that calls the web API and the node 10 that responds with the web API will now be described. FIG. 12 is a sequence diagram illustrating an example of the communication process according to the first arrangement. FIG. 12 is the example where the node 10 transmits a key-offering message (with a key) in response to the request message of the encryption key from the application 20. FIG. 12 also illustrates an example of the HTTP header of the request message and the HTTP header of the key-offering message.

First, the application 20 transmits the request message for the encryption key to the node 10 (step S101). This request message can have, for example, the format of the second API in FIG. 6. When receiving the request message from the application 20, the calculator 103 of the node 10 calculates limit information, with reference to the values of the above parameters, such as the accumulated volume of the requested encryption key, the number of requested encryption keys, and the number of other connected applications 20 (step S102). The calculator 103 indicates, to the communication controller 101, the addition of the limit information to the HTTP header of the key-offering message (step S103). The communication controller 101 transmits the key-offering message with the limit information to the application 20 that has requested the encryption key (step S104).

For example, the limit information is "X-RateLimit-Limit", "X-RateLimit-Remaining", and "X-RateLimit-Reset". The calculator 103 of the node 10 calculates these pieces of limit information with reference to the above parameters and adds them to the key-offering message.

For example, "X-RateLimit-Limit" can be calculated as follows. First, the calculator 103 calculates a value obtained by dividing the sharing rate of the requested encryption key by the number of currently connected applications 20 that require the encryption key. The calculator 103 calculates "X-RateLimit-Limit" by further dividing the obtained value by the number of encryption keys that the application 20 requesting the encryption key has acquired at a time in the previous API call.

The method of calculating "X-RateLimit-Limit" is not limited to this. The calculator 103 may use, for example, a method of weighting with the priority or authentication level of the application 20 to calculate the limit information, and a method of allowing for the accumulated volume of the encryption key in addition.

The calculator 103 makes the value of "X-RateLimit-Limit" larger, for example, as the priority of the application 20 is higher. Alternatively, the calculator 103 makes the value of "X-RateLimit-Limit" larger as the size of the encryption key is larger. Alternatively, the calculator 103 makes the value of "X-RateLimit-Limit" larger, for example, as the volume of the encryption key previously offered to the application 20 that has requests the encryption key is larger. Alternatively, the calculator 103 makes the value of "X-RateLimit-Limit" larger, for example, as the authentication level is higher. Alternatively, the calculator 103 makes the value of "X-RateLimit-Limit" larger, for example, as the throughput of the node 10 is smaller.

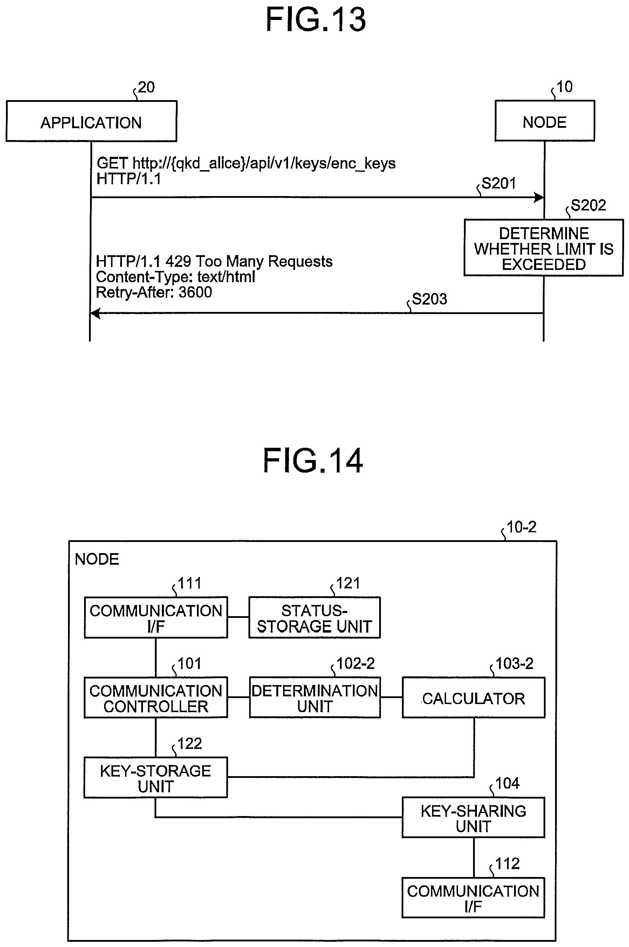

FIG. 13 is a sequence diagram illustrating another example of the communication process according to the first arrangement. FIG. 13 is the example where the node 10 determines that the application 20 exceeds a rate limit, and the node 10 returns a key-offering message (an error response, without key), in response to the request message from the application 20.

First, the application 20 transmits the request message for the encryption key to the node 10 (step S201). When receiving the request message from the application 20, the determination unit 102 of the node 10 determines whether the limit of a frequency with which the request message is called is exceeded (step S202). This determination process may be performed before step S102 in FIG. 12. For example, the calculation process of step S102 may be performed when it is determined that the limit of the frequency with which the request message is called is not exceeded.

The example in FIG. 13 assumes that the determination unit 102 determines that the limit of the frequency with which the request message is called is exceeded. In this case, the communication controller 101 transmits, to the application 20, an error message indicating that the limit has been exceeded (step S203).

As illustrated in FIG. 13, a "Retry-After" header is added to the HTTP header of this response message (an error message). The node 10 notifies the application 20 of time for which the application 20 should wait before a retry of the API call, by the "Retry-After" header. The determination unit 102 of the node 10 calculates time to be set to the "Retry-After" header, for example, with reference to the values of the above-described parameters. The value set to the "Retry-After" header corresponds to the next timing at which the request message is allowed to be called.

For example, the determination unit 102 collects the values of the above parameters, such as the sharing state of the encryption key, the accumulation state of the encryption key, and the status of the application 20, from the status-storage unit 121, the key-storage unit 122, and the key-sharing unit 104. The determination unit 102 estimates time at which the encryption key is allowed to be offered to the application 20 that has requests the encryption key, with reference to the collected values, and calculates the time as the time to be set to the "Retry-After" header.

In this way, in the first arrangement, the response message with the limit information is returned to the application when the application requests the encryption key. Such a scheme achieves the reduction of the number of communication times between the application and the node, in comparison with the scheme where the application explicitly requests the limit information, for example, using the first API or the like in FIG. 6.

Furthermore, in the first arrangement, it is not necessary to expand (modify) the capability on the application side if the application can handle, for example, the web API described in "GitHub Developer, [online], August 2017, retrieved from the Internet: URL:https://developer.github.com/v3/#rate-limiting".

In the first arrangement, the API call is limited in view of the state of the encryption key in the node. On the other hand, some APIs do not necessarily offer the encryption key, like the first API in FIG. 6. For the configuration where the API call is limited regardless of a type of API, the volume of the encryption key causes the call limit of the API to be valid, so that the call limit will also work for the API that offers no encryption key.

### Second Arrangement

In the second arrangement, an HTTP header in a format different from conventional schemes including "GitHub Developer, [online], August 2017, retrieved from the Internet: URL:https://developer.github.com/v3/#rate-limiting" is newly defined, and a node notifies an application of more specific rate-limit information.

FIG. 14 is a block diagram illustrating an example of the configuration of a node 10-2 according to the second arrangement. As illustrated in FIG. 14, the node 10-2 includes the communication interfaces (I/Fs) 111 and 112, the status-storage unit 121, the key-storage unit 122, the communication controller 101, a determination unit 102-2, a calculator 103-2, and the key-sharing unit 104.

In the second arrangement, the capabilities of the determination unit 102-2 and the calculator 103-2 are different from those in the second arrangement. Since the other configurations and capabilities are similar to those in FIG. 5, which is the block diagram of the node 10 according to the first arrangement, they are followed by the same characters and their descriptions are omitted here.

The calculator 103-2 calculates limit information in a format different from that in the first arrangement. The determination unit 102-2 determines whether a limit that the limit information indicates is satisfied, using the limit information in the format different from that in the first arrangement. For example, the limit information includes at least one of the maximum value of the encryption key that is allowed to be offered per unit time in response to the request message and the remaining volume of the encryption key that is allowed to be offered per unit time in response to the request message. An example of the limit information according to the present arrangement will be discussed below.

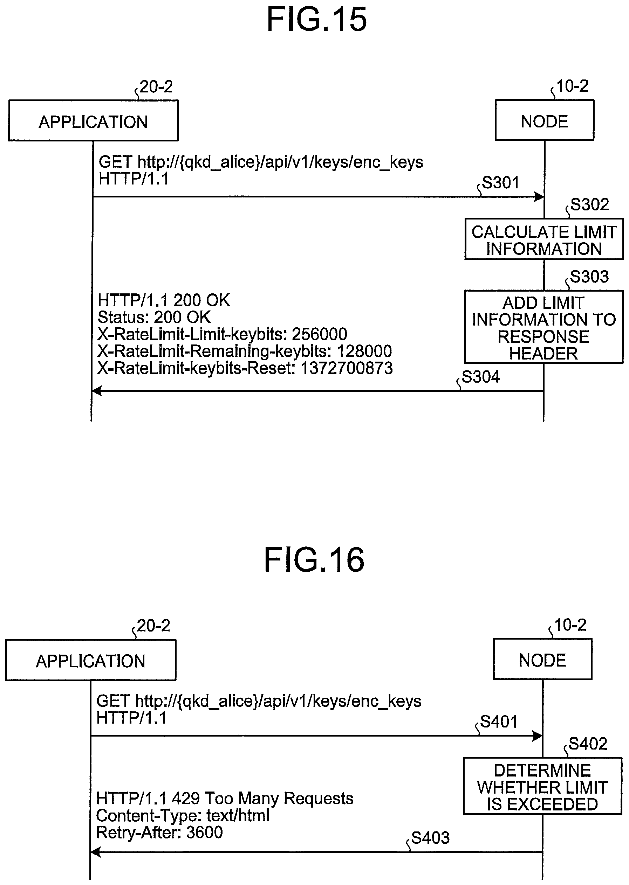

FIG. 15 is a sequence diagram illustrating an example of the communication process according to the second arrangement. FIG. 15 illustrates the example where the node 10-2 returns a key-offering message (with a key) in response to a key-requesting message from an application 20-2. In the second arrangement, the capability of the application 20-2 is expanded such that the limit information in the format different from that in the first arrangement can be used.

The flow of steps S301 to S304 is similar to that of steps S101 to S104 in FIG. 12. In FIG. 15, the format of the limit information added to a header is different from that in FIG. 12.

As illustrated in FIG. 15, when receiving the request message, the calculator 103-2 of the node 10-2 calculates, as the limit information, "X-RateLimit-Limit-keybits", "X-RateLimit-Remaining-keybits", and "X-RateLimit-keybits-Reset", with reference to the values of the above-described parameters (step S302).

These pieces of limit information are HTTP headers newly introduced in the present arrangement. For example, "X-RateLimit-Limit-keybits" represents the maximum volume (bit unit) of the encryption key available per unit time to the application 20-2 requesting the encryption key. For example, "X-RateLimit-Remaining-keybits" represents the remaining volume (bit unit) of the encryption key available per unit time to the application 20-2 requesting the encryption key. For example, "X-RateLimit-keybits-Reset" represents elapsed time required for a reset of the volume of the available encryption key.

The communication controller 101 transmits a key-offering message with these pieces of limit information to the application 20-2 that has requested the encryption key (step S304).

For example, the calculator 103-2 calculates, as "X-RateLimit-Limit-keybits", a value obtained by dividing the sharing rate of the requested encryption key by the number of currently connected applications 20-2 that require the encryption key.

The method of calculating "X-RateLimit-Limit-keybits" is not limited to this. The calculator 103-2 may use, for example, a method of weighting with the priority or authentication level of the application 20-2 to calculate the limit information, and a method of allowing for the storage volume of the encryption key in addition.

The calculator 103-2 may calculate "X-RateLimit-Remaining-keybits" by subtracting, from "X-RateLimit-Limit-keybits", a history (the actual volume of the offered encryption key) of the application 20-2 that has requested the encryption key calling the API within unit time.

FIG. 16 is a sequence diagram illustrating another example of the communication process according to the second arrangement. FIG. 16 illustrates the example where the node 10-2 determines that the application 20-2 exceeds a rate limit, and the node 10-2 returns a key-offering message (an error response, without key), in response to the request message from the application 20-2.

First, the application 20-2 transmits the request message for an encryption key to the node 10-2 (step S401). When receiving the request message from the application 20-2, the determination unit 102-2 of the node 10-2 determines whether a limit that the limit information indicates is exceeded (step S402). For example, the determination unit 102-2 determines whether the volume (bit unit) of the requested encryption key exceeds "X-RateLimit-Remaining-keybits". This determination process may be performed before step S302 in FIG. 15. For example, the calculation process of step S302 may be performed when it is determined that the limit that the limit information indicates is exceeded.

The example in FIG. 16 assumes that the determination unit 102-2 determines that the limit that the limit information indicates is exceeded. In this case, the communication controller 101 transmits an error message, to the application 20-2, indicating that the limit has been exceeded (step S403).

As illustrated in FIG. 16, a "Retry-After" header is added to the HTTP header of this response message (an error message). The node 10-2 notifies the application 20-2 of time for which it should wait before a retry of the API call, by the "Retry-After" header. The determination unit 102-2 of the node 10-2 calculates time to be set to the "Retry-After" header, for example, with reference to the values of the above-described parameters.

The second arrangement requires expanding the capability of the application 20-2, unlike the first arrangement. That is, the application 20-2 requires to be modified to interpret new headers, such as "X-RateLimit-Limit-keybits", "X-RateLimit-Remaining-keybits", and "X-RateLimit-keybits-Reset".

On the other hand, the second arrangement enables the call limit to be applied only to the API that offers the encryption key (e.g., the second and the third in FIG. 6). That is, the same call limit is not applied to the API that offers the encryption key (e.g., the second and the third in FIG. 6) and the API that offers no encryption key (e.g., the first in FIG. 6).

To perform the call limit of the API that offers no encryption key (e.g., the first in FIG. 6) and that of the API that offers the encryption key (e.g., the second and the third in FIG. 6) independently, another capability, such as the following first modification, is required.

### First Modification

The first modification uses the status code or the HTTP headers for the rate limit, such as that in the first example or the second example described above, as well as the HTTP headers newly defined in the second arrangement.

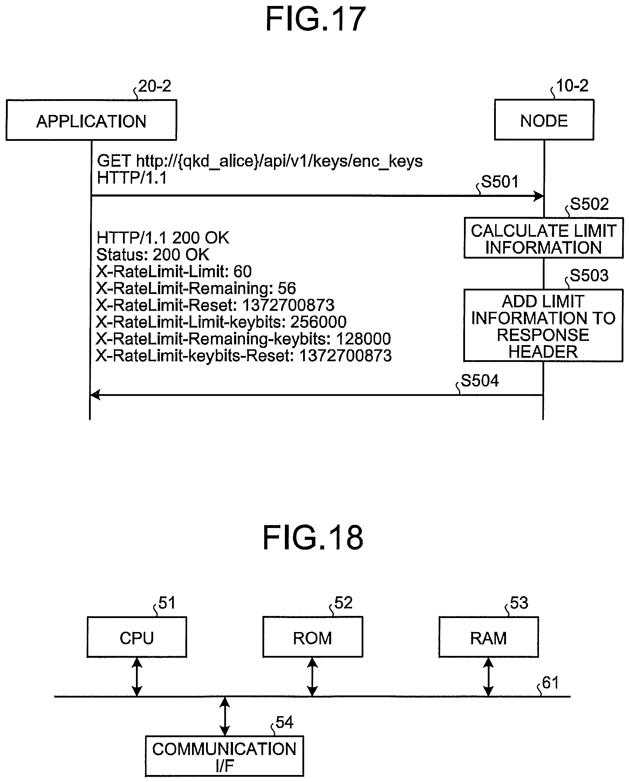

FIG. 17 is a sequence diagram illustrating an example of the communication process according to the first modification. FIG. 17 illustrates the example where the node 10-2 returns a key-offering message (with a key) in response to the request message for the encryption key from an application 20-2.

The flow of steps S501 to S504 is similar to that of steps S301 to S304 in FIG. 15. In FIG. 17, the format of the limit information added to a header is different from that in FIG. 15. That is, in this variation, "X-RateLimit-Limit", "X-RateLimit-Remaining", and "X-RateLimit-Reset" are added as the limit information.

In the present modification, "X-RateLimit-Limit", "X-RateLimit-Remaining", and "X-RateLimit-Reset" are calculated regardless of the sharing rate and accumulated volume of the encryption key. For example, these pieces of limit information are used for the rate limit of the web API depending on, for example, the throughput of the node 10-2, the authentication level of the application 20-2, and the number of connected applications 20-2.

The present modification uses, with these pieces of limit information, "X-RateLimit-Limit-keybits", "X-RateLimit-Remaining-keybits", and "X-RateLimit-keybits-Reset", which are the HTTP headers newly introduced in the second arrangement. Similarly to the second arrangement, this enables the application 20-2 to be notified of more specific information about the encryption key. The configuration of the present modification enables the rate limit of a general web API and the rate limit due to an environment specific to the present arrangement, such as the sharing rate and remaining volume of the encryption key, to be set independently at the same time.

### Second Modification

These arrangements may have a configuration where the application (an information processing apparatus with the application installed) controls communication in the apparatus itself based on the limit information notified by the node. For example, the application may control the number of times that a message including the request message for requesting the encryption key is transmitted, with reference to "X-RateLimit-Limit" and "X-RateLimit-Remaining", which have been notified.

As described above, the first and second arrangements enable the volume of the encryption key offered to the application to be limited depending on the sharing rate of the encryption key, the accumulated volume of the encryption key, and the like.

A hardware configuration of the communication apparatus according to the first and second arrangements will now be described using FIG. 18. FIG. 18 is an illustration of an example of the hardware configuration of the communication apparatus according to the first and second arrangements.

The communication apparatus according to the first and second arrangements includes a controller, such as a CPU 51, a storage device, such as a read-only memory (ROM) 52 and a RAM 53, a communication I/F 54, and a bus 61. The communication I/F is coupled to a network and performs communication. The bus couples these units.

A computer program executed on the communication apparatus according to the first and second arrangements is provided with the computer program pre-installed into the ROM 52 and other devices.

The computer program executed on the communication apparatus according to the first and second arrangements may be configured to be provided as a computer program product with the computer program stored into a computer-readable medium, such as a compact disc read-only memory (CD-ROM), a flexible disk (FD), a compact disc recordable (CD-R), and a digital versatile disc (DVD), with a file in an installable format or an executable format.

Furthermore, the computer program executed on the communication apparatus according to the first and second arrangements may be configured to be provided by storing the computer program onto a computer coupled to a network, such as the Internet, and downloading it via the network. The computer program executed on the communication apparatus according to the first and second arrangements may be configured to be provided or distributed via the network, such as the Internet.

The computer program executed on the communication apparatus according to the first and second arrangements may cause a computer to function as each unit of the communication apparatus described above. In this computer, the CPU 51 can read the computer program from a computer-readable medium onto a main storage device to execute it.

While certain arrangements have been described, these arrangements have been presented by way of example only, and are not intended to limit the scope of the claims. Indeed, the novel apparatuses described herein may be embodied in a variety of other forms; furthermore, various omissions, substitutions and changes in the form of the apparatuses described herein may be made.

Variation 1. A communication apparatus that offers an encryption key shared with another communication apparatus to an application, and includes a calculator and a communication controller. The calculator is configured to calculate limit information for limiting a call for a request message in which the application requests the encryption key, based on at least one of a sharing rate of the encryption key and an accumulated volume of the encryption key. The communication controller is configured to transmit a response message with the limit information to the application, the response message returning the encryption key as a response to the request message.

Variation 2. In the communication apparatus according to Variation 1, the limit information includes at least one of a maximum value of the number of times that the request message is allowed to be called per unit time and the remaining number of times that the request message is allowed to be called per unit time.

Variation 3. In the communication apparatus according to Variation 1, the limit information includes at least one of the maximum value of the encryption key that is allowed to be offered per unit time in response to the request message and the remaining volume of the encryption key that is allowed to be offered per unit time in response to the request message.

Variation 4. The communication apparatus according to Variation 1 further comprising a determination unit configured to determine whether a limit of the call for the request message is exceeded when the request message is received, wherein when it is determined that the limit of the call for the request message is exceeded, the communication controller further transmits, to the application, an error message indicating that the limit has been exceeded.

Variation 5. In the communication apparatus according to Variation 4, the communication controller transmits, to the application, an error message that includes information indicating a timing at which the request message is allowed to be called.

Variation 6. In the communication apparatus according to Variation 1, the calculator further calculates the limit information based on at least one of the number of the applications, a priority of the application, a volume of the encryption key requested, a volume of the encryption key previously offered to the application, and an authentication result of the application.

Variation 7. In the communication apparatus according to Variation 1, the request message and the response message are web application programming interfaces (APIs) based on a hypertext transfer protocol (HTTP) and a JavaScript object notation (JSON), and the limit information is added to an HTTP header of the response message.

Variation 8. A communication method executed on a communication apparatus that offers an encryption key shared with another communication apparatus to an application, the method includes: calculating limit information for limiting a call for a request message in which the application requests the encryption key, based on at least one of a sharing rate of the encryption key and an accumulated volume of the encryption key; and transmitting a response message with the limit information to the application, the response message returning the encryption key as a response to the request message.

Variation 9. A computer-readable medium includes instructions which, when executed by a computer included in a communication apparatus that offers an encryption key shared with another communication apparatus to an application, cause the computer to function as: a calculator configured to calculate limit information for limiting a call for a request message in which the application requests the encryption key, based on at least one of a sharing rate of the encryption key and an accumulated volume of the encryption key; and a communication controller configured to transmit a response message with the limit information to the application, the response message returning the encryption key as a response to the request message.

Variation 10. A communication system includes an information processing apparatus that executes an application; and a communication apparatus that offers an encryption key shared with another communication apparatus to the application. The communication apparatus includes a calculator configured to calculate limit information for limiting a call for a request message in which the application requests the encryption key, based on at least one of a sharing rate of the encryption key and an accumulated volume of the encryption key; and a communication controller configured to transmit a response message with the limit information to the application, the response message returning the encryption key as a response to the request message, wherein the application controls communication based on the limit information included in the response message.

## Claims

1. A communication apparatus (10: 10-2) that offers an encryption key shared with another communication apparatus (10: 10-2) to an application (20; 20-2), the communication apparatus (10: 10-2) comprising:
a calculator (103: 103-2) configured to calculate limit information for limiting a call for a request message in which the application (20; 20-2) requests the encryption key, based on at least one of a sharing rate of the encryption key and an accumulated volume of the encryption key; and
a communication controller (101) configured to transmit a response message with the limit information to the application (20; 20-2), the response message returning the encryption key as a response to the request message.

2. The communication apparatus (10: 10-2) according to claim 1, wherein
the limit information includes at least one of a maximum value of the number of times that the request message is allowed to be called per unit time and the remaining number of times that the request message is allowed to be called per unit time.

3. The communication apparatus (10: 10-2) according to claim 1, wherein
the limit information includes at least one of the maximum value of the encryption key that is allowed to be offered per unit time in response to the request message and the remaining volume of the encryption key that is allowed to be offered per unit time in response to the request message.

4. The communication apparatus (10: 10-2) according to claim 1, further comprising a determination unit (102; 102-2) configured to determine whether a limit of the call for the request message is exceeded when the request message is received, wherein
when it is determined that the limit of the call for the request message is exceeded, the communication controller (101) further transmits, to the application, an error message indicating that the limit has been exceeded.

5. The communication apparatus (10: 10-2) according to claim 4, wherein
the communication controller (101) transmits, to the application (20; 20-2), an error message that includes information indicating a timing at which the request message is allowed to be called.

6. The communication apparatus (10: 10-2) according to claim 1, wherein
the calculator (103; 103-2) further calculates the limit information based on at least one of the number of the applications (20; 20-2), a priority of the application (20; 20-2), a volume of the encryption key requested, a volume of the encryption key previously offered to the application (20; 20-2), and an authentication result of the application (20; 20-2).

7. The communication apparatus (10: 10-2) according to claim 1, wherein
the request message and the response message are web application programming interfaces (APIs) based on a hypertext transfer protocol (HTTP) and a JavaScript object notation (JSON), and the limit information is added to an HTTP header of the response message.

8. A communication method executed on a communication apparatus (10: 10-2) that offers an encryption key shared with another communication apparatus (10: 10-2) to an application (20; 20-2), the method comprising:
calculating limit information for limiting a call for a request message in which the application requests the encryption key, based on at least one of a sharing rate of the encryption key and an accumulated volume of the encryption key; and
transmitting a response message with the limit information to the application (20; 20-2), the response message returning the encryption key as a response to the request message.

9. A computer-readable medium comprising instructions which, when executed by a computer (51) included in a communication apparatus (10: 10-2) that offers an encryption key shared with another communication apparatus (10: 10-2) to an application (20; 20-2), cause the computer (51) to perform:
calculating limit information for limiting a call for a request message in which the application (20; 20-2) requests the encryption key, based on at least one of a sharing rate of the encryption key and an accumulated volume of the encryption key; and
transmitting a response message with the limit information to the application (20; 20-2), the response message returning the encryption key as a response to the request message.

10. A communication system comprising:
an information processing apparatus that executes an application (20; 20-2); and
a communication apparatus (10: 10-2) that offers an encryption key shared with another communication apparatus (10: 10-2) to the application (20; 20-2),
the communication apparatus (10: 10-2) including
a calculator (103; 103-2) configured to calculate limit information for limiting a call for a request message in which the application (20; 20-2) requests the encryption key, based on at least one of a sharing rate of the encryption key and an accumulated volume of the encryption key; and
a communication controller (101) configured to transmit a response message with the limit information to the application (20; 20-2), the response message returning the encryption key as a response to the request message, wherein
the application (20; 20-2) controls communication based on the limit information included in the response message.
